# FASCICULE DE BREVET EUROPEEN

(11) **EP 1 958 872 B1**
(45) Date de publication et mention de la délivrance du brevet: **11.05.2011**
(21) Numéro de dépôt: 08001497.0
(22) Date de dépôt: 28.01.2008
(51) Int. Cl.: B64C 25/26, B64C 25/60, B64D 45/00, B60G 17/048

(54) **Procédé et dispositif de contrôle de la garde au sol d'un aéronef**
Methode und Vorrichtung zur Kontrolle der Bodenfreiheit eines Luftfahrzeugs
Process and apparatus to control the clearance height of an aircraft

(30) Priorité: 16.02.2007 FR 0701128
(43) Date de publication de la demande: 20.08.2008
(73) Titulaire: EUROCOPTER, 13725 Marignane Cédex (FR)
(72) Inventeur: Mouton, Luc, 13510 Eguilles (FR)
(74) Mandataire: GPI & Associés

(56) Documents cités:
- EP-A2- 0 677 679
- FR-A1- 2 493 444
- GB-A- 821 874
- US-A- 2 973 955
- US-A- 3 887 174
- US-A- 6 120 009

## Description

La présente invention concerne un procédé et un dispositif de contrôle de la garde au sol d'un aéronef, plus particulièrement un giravion, par exemple un hélicoptère muni d'un train d'atterrissage à balancier par exemple.

En effet, afin de répondre à des besoins déterminés, il est parfois nécessaire de surbaisser et/ou de surélever un giravion dont les organes de contact reposent sur le sol, ces opérations étant respectivement dénommées « baraquage » et « contre-baraquage » par l'homme du métier.

Le baraquage autorise notamment le chargement d'un hélicoptère dans un espace exigu comme la soute d'un navire ou encore un hangar de petites dimensions.

De plus, lors d'une utilisation navale, le baraquage augmente la stabilité de l'hélicoptère lorsqu'il est posé sur le pont d'un navire, le surbaissement de l'hélicoptère induisant un abaissement de son centre de gravité. En outre, la garde au sol étant réduite, ladite garde sol étant la hauteur séparant le sol du fuselage, l'ancrage de l'hélicoptère s'en trouve facilité.

Le contre-baraquage consiste au contraire à surélever' l'aéronef. Par exemple, cette opération permet de surélever un giravion afin de pouvoir faire passer un véhicule sous la poutre de queue du giravion pour le faire pénétrer dans une soute d'embarquement.

Pour effectuer le baraquage ou le contre baraquage, on connaît des dispositifs agissant sur les trains d'atterrissage d'un aéronef, le faisant passer d'une position normale à une position basse ou haute.

On connaît le document US 6,120,009 A1, qui est considéré comme l'art antérieur le plus proche et décrit les charactéristiques du préambule des revendications indépendantes.

En outre, on connaît le document FR 2608242 qui décrit un vérin-amortisseur assurant une fonction d'amortissement d'un train et une fonction de rétractation tout en autorisant un baraquage ou un contre-baraquage.

Le vérin-amortisseur est agencé sur un train à balancier de giravion. Classiquement, il permet de sortir ou de rentrer le train d'atterrissage dans un caisson prévu à cet effet, et assure aussi une fonction d'amortissement des chocs.

Ce vérin-amortisseur comporte une tige, dans laquelle un premier piston coulissant délimite une chambre de sortie, qui coulisse elle-même dans un corps par un deuxième piston délimitant une chambre de rétraction. Ainsi, ce dispositif autorise des opérations de baraquage et de contre-baraquage en faisant passer le train d'atterrissage d'une position normale à une position surbaissée ou surélevée.

Pour surbaisser le giravion, un opérateur fait communiquer la chambre de sortie avec un circuit hydraulique alors que la pression régnant dans la chambre de rétraction est faible. Le poids du giravion assure alors la rentrée de la tige dans ledit corps, la faisant passer d'une position normale à une position surbaissée. Le baraquage est alors effectué.

Afin de revenir à la position normale, il convient de remettre en pression la chambre de sortie à l'aide du circuit hydraulique. De même, afin de procéder au contre-baraquage, on augmente encore ladite pression afin de faire passer la tige d'une position normale à une position surélevée.

Par conséquent, un tel dispositif muni d'au moins un train atterrissage comportant un vérin-amortisseur met en oeuvre des opérations de baraquage et de contre-baraquage. Toutefois, on constate que ce dispositif n'autorise que trois positions, à savoir surbaissée, normale et surélevée. De plus, chaque changement nécessite une intervention d'un opérateur.

En outre, la garde au sol dépend du réglage mais aussi de la charge de l'aéronef, dans la mesure où les vérins-amortisseurs des trains d'atterrissage s'affaissent plus ou moins en fonction de la masse totale de l'aéronef. Une mauvaise estimation de cette masse peut conduire à des incidents dans la mesure où la garde au sol nécessaire peut ne plus être atteinte, à cause d'un écrasement trop important des roues, par exemple.

En effet, si ces dernières ne sont pas suffisamment gonflées, la garde au sol va être plus basse que prévu ce qui peut conduire à la destruction d'équipements agencés sous le fuselage de l'aéronef, un radar par exemple.

De même, la température extérieure peut influencer cette garde au sol.

La présente invention a pour objet de proposer un procédé et un dispositif actif, permettant de s'affranchir des limitations des dispositifs mentionnés ci-dessus en garantissant en permanence une garde au sol adaptée à la situation.

Selon l'invention telle que décrite par les caractéristiques de la revendication 1 et de la revendication 8, un procédé de contrôle et d'ajustage de la garde au sol d'un aéronef muni d'au moins un train d'atterrissage, ce train d'atterrissage étant pourvu d'un vérin-amortisseur pour assurer une fonction d'amortissement et une fonction de rétractation du train d'atterrissage, est remarquable en ce qu'un moyen de commande active automatiquement un moyen de réglage pour ajuster la longueur du vérin-amortisseur afin de maintenir ladite garde au sol à une valeur prédéterminée.

Lorsque l'aéronef est au sol, le moyen de réglage ajuste alors en permanence la longueur du vérin-amortisseur.

Par suite, la garde au sol est maintenue automatiquement et en permanence à une valeur prédéterminée. Les conditions extérieures ou la charge de l'aéronef n'ont plus d'influence puisque la garde au sol est tout le temps réajustée.

Cette valeur prédéterminée de la garde au sol est indiquée au moyen de commande, un microprocesseur par exemple, via une interface. L'interface, un clavier par exemple peut être soit incluse au moyen de commande, soit indépendante de ce moyen de commande en étant déportée dans le cockpit de l'aéronef, par exemple.

Toutefois, le moyen de commande dispose avantageusement de sécurités pour éviter des erreurs humaines, par exemple.

Le moyen de commande comportant une valeur de sécurité minimale de la garde au sol, si ladite valeur prédéterminée est inférieure à cette valeur de sécurité minimale alors le moyen de commande considère que ladite valeur prédéterminée est égale à la valeur de sécurité minimale.

De même, le moyen de commande comportant une valeur de sécurité maximale de la garde au sol, si ladite valeur prédéterminée est supérieure à ladite valeur de sécurité maximale alors le moyen de commande considère que la valeur prédéterminé est égale à la valeur de sécurité maximale.

Ces sécurités permettent alors de borner la plage disponible pour la valeur prédéterminée.

Par ailleurs, afin de maintenir la garde au sol à la valeur prédéterminée souhaitée, selon un mode de réalisation du procédé, un capteur envoie au moyen de commande un signal représentatif de la garde au sol de l'aéronef. On verra par la suite que le capteur peut être un capteur laser classique mesurant une distance ou encore un capteur angulaire agencé sur un bras de levier du train d'atterrissage par exemple.

Le moyen de commande active alors le moyen de réglage afin d'ajuster la longueur du vérin-amortisseur pour que la garde au sol atteigne la valeur prédéterminée. La longueur du vérin-amortisseur est en permanence augmentée ou abaissée pour que la garde au sol reste à un niveau de consigne.

Selon une variante de l'invention, le dispositif comporte une pluralité de capteurs qui envoie chacun au moyen de commande un signal représentatif d'une valeur actuelle locale de la garde au sol dans un zone définie de l'aéronef. Le moyen de commande réalise alors un traitement de ces signaux, une moyenne par exemple, pour déterminer une valeur actuelle globale de la garde au sol puis active le moyen de réglage afin d'ajuster la longueur dudit vérin-amortisseur pour que la valeur actuelle globale de la garde au sol atteigne la valeur prédéterminée.

La présente invention a aussi pour objet un dispositif permettant de mettre en oeuvre le procédé décrit précédemment.

Un dispositif de contrôle et d'ajustage de la garde au sol d'un aéronef muni d'au moins un train d'atterrissage, ce train d'atterrissage étant pourvu d'un vérin-amortisseur pour assurer une fonction d'amortissement et une fonction de rétractation dudit train d'atterrissage, est remarquable en ce qu'il est pourvu d'un moyen de réglage de la longueur dudit vérin-amortisseur et d'un moyen de commande, ledit moyen de commande ajustant automatiquement la longueur du vérin-amortisseur via ledit moyen de réglage afin de maintenir la garde au sol à une valeur prédéterminée, ledit moyen de commande bornant de plus ladite valeur prédéterminée.

De préférence, le dispositif comporte une interface permettant à un opérateur d'indiquer la valeur prédéterminée en fonction de la situation pour obtenir soit une garde sol haute ou basse.

Il est à noter que cette interface, un clavier et/ou une souris d'ordinateur par exemple, peut être intégrée au moyen de commande ou bien déportée.

Dans ce dernier cas, l'interface est reliée au moyen de commande via une liaison filaire ou sans fil en utilisant une liaison radio par exemple.

Par ailleurs, pour mesurer la garde au sol de l'aéronef, il est préférable que le dispositif comporte au moins un capteur. Ce capteur peut consister en un capteur laser classique ou bien encore en un capteur angulaire mesurant l'inclinaison du bras du train d'atterrissage, cette inclinaison déterminant la garde au sol. Toutefois, dans ce dernier cas, l'information sera légèrement dégradée car l'écrasement de la roue sur le sol en fonction du poids de l'aéronef n'est pas pris en compte.

Le capteur envoie alors un signal représentatif de la garde au sol au moyen de commande. Par suite, le moyen de commande compare la valeur actuelle de la garde au sol relevée par le capteur avec la valeur prédéterminée de consigne à atteindre.

Si ces valeurs différent, le moyen de commande active le moyen de réglage pour diminuer ou augmenter la longueur du vérin-amortisseur du train d'atterrissage. En effet, une variation de cette longueur a une conséquence directe sur la garde au sol.

Le vérin-amortisseur étant muni d'une tige, dans laquelle un premier piston coulissant délimite une chambre de sortie, qui coulisse elle-même dans un corps, le moyen de réglage comporte avantageusement au moins une électrovanne pour faire varier la quantité de liquide hydraulique présente dans la chambre de sortie dudit vérin-amortisseur.

Lorsque l'électrovanne permet de remplir ladite chambre de sortie sur l'ordre du moyen de commande, la pression dans la chambre s'accroît. Par suite, la longueur du vérin-amortisseur augmente afin que la garde au sol atteigne la valeur souhaitée. On comprend que l'opération permet d'augmenter la garde au sol.

Ainsi, le procédé et le dispositif selon l'invention permettent de faire évoluer la garde au sol d'un aéronef sur toute une plage entre une valeur minimale et une valeur maximale. De plus, le dispositif fonctionne en boucle fermée, la garde au sol évoluant au cours du temps pour se stabiliser à la valeur de consigne prédéterminée par un opérateur.

L'invention et ses avantages apparaîtront avec plus de détails dans le cadre de la description suivante, qui illustre des exemples de réalisation préférés, donnés sans aucun caractère limitatif, en référence aux figures annexées qui représentent :
- la figure 1, une vue schématique d'un premier mode de réalisation du dispositif selon l'invention, et
- la figure 2, une vue schématique d'un deuxième mode de réalisation du dispositif selon l'invention.

Les éléments présents dans plusieurs figures distinctes sont affectés d'une seule et même référence.

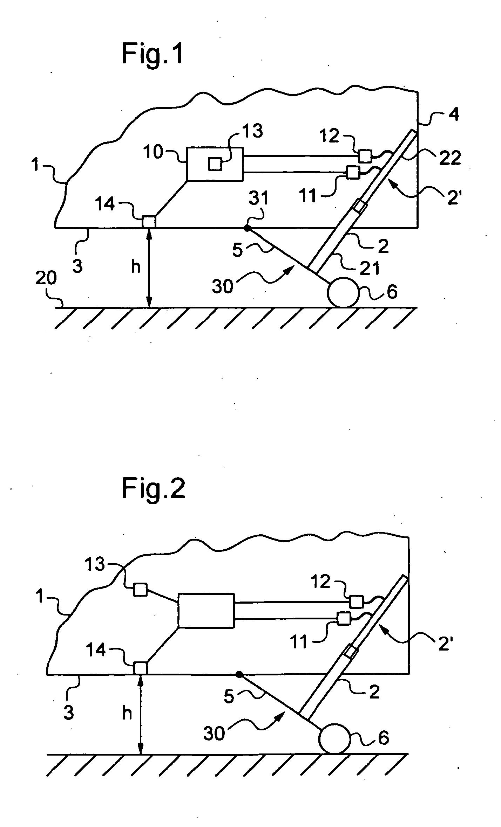

Les figures 1 et 2 présentent un aéronef 1 muni d'un plancher 3 et d'un élément de structure verticale 4.

De plus, l'aéronef 1 repose sur le sol 20 à l'aide d'au moins un train d'atterrissage 30 comportant un bras 5, une première extrémité 31 de ce bras 5 étant articulée par rapport au plancher 3 alors que sa deuxième extrémité est munie d'un train de roulement 6.

Dans ce contexte, la hauteur h qui sépare le plancher 3 du sol 20 est appelé «garde au sol » par l'homme du métier.

Par ailleurs, le train d'atterrissage 30 est pourvu d'un vérin-amortisseur 2 usuel qui possède une tige 21, dans laquelle un premier piston coulissant délimite une chambre de sortie 2', qui coulisse elle-même dans un corps 22. Le vérin-amortisseur 2 est solidarisé d'une part au bras 5 du train d'atterrissage 30 et d'autre part à l'élément de structure 4. Le vérin-amortisseur 2 permet alors d'assurer d'une part la rétractation et la sortie du train d'atterrissage 30 et, d'autre part, une fonction d'amortissement.

La présente invention a notamment pour objet un dispositif pour contrôler et ajuster la garde au sol h de l'aéronef 1 via un moyen de commande 10, un microprocesseur programmé à cet effet par exemple.

Le moyen de commande active alors un moyen de réglage 11, 12 pour augmenter ou réduire la longueur du vérin-amortisseur 2. On comprend en effet, qu'une augmentation de la longueur de ce vérin-amortisseur entraîne un contre-baraquage à savoir une surélévation de la garde au sol h, alors qu'une diminution de cette longueur produit du baraquage et donc un surbaissement de la garde au sol.

Conformément à l'invention, le moyen de commande 10 ajuste la longueur du vérin automatiquement et en permanence afin que la garde au sol soit maintenue à une valeur prédéterminée.

Afin qu'un opérateur indique la valeur prédéterminée au moyen de commande 10, le dispositif dispose d'une interface 13, un clavier par exemple. A l'aide de cette interface 13, l'opérateur fixe la valeur prédéterminée, à savoir une hauteur que la garde au sol doit atteindre.

Eventuellement, selon une variante de l'invention, l'opérateur va fixer une configuration et le moyen de commande en déduira la garde au sol de consigne. Par exemple, l'opérateur indique au moyen de commande que l'aéronef est équipé d'un dôme radar, le moyen de commande en déduisant une garde au sol de consigne à atteindre afin que le dôme ne soit pas endommagé à l'aide de l'exploitation d'une base de données, par exemple. Le dispositif permettra alors de garantir ladite garde au sol de consigne quelques soient les conditions extérieures ou le poids de l'aéronef.

Selon une dernière variante, le moyen de commande est muni d'une valeur minimale de sécurité. Dans cette configuration, si la valeur indiquée par l'opérateur via l'interface est inférieure à la valeur de sécurité alors, la valeur prédéterminée sera égale à la valeur de sécurité. Cela permet de s'assurer qu'une garde au sol minimale sera toujours assurée de manière à préserver les équipements.

De même, il est envisageable d'implémenter une valeur de sécurité maximale pour ne pas mettre en butée le vérin-amortisseur 2.

Selon un premier mode de réalisation, en référence à la figure 1, l'interface est une partie intégrante du moyen de commande. Il peut s'agir dans ce cas d'une simple prise sur laquelle un opérateur va connecter un ordinateur portable, par exemple, pour communiquer avec le moyen de commande 10.

Selon un deuxième mode de réalisation, en référence à la figure 2, l'interface est déportée. Elle ne fait pas partie du moyen de commande et peut être agencée dans le cockpit de l'aéronef, par exemple, afin d'être utilisée par le pilote de cet aéronef.

Selon une première variante de ces modes de réalisation, une fois la valeur de la garde au sol de consigne prédéterminée, le moyen de commande active le moyen de réglage pour ajuster la longueur du vérin-amortisseur.

Par suite, le moyen de commande détermine la longueur que devrait atteindre le vérin-amortisseur afin d'obtenir la garde au sol souhaitée, puis commande les moyens de réglage pour augmenter ou diminuer ladite longueur de la manière adaptée.

Cette variante est efficace mais laisse demeurer une incertitude puisque la pression du ou des pneus du train de roulement 6 a une conséquence directe sur la garde au sol h.

Ainsi, selon une deuxième variante des modes de réalisation, le dispositif comporte au moins un capteur 14.

Ce capteur est par exemple un capteur laser qui fournit un signal représentatif de la garde au sol h de l'aéronef. On peut aussi envisager un capteur angulaire disposé sur le bras 5 du train d'atterrissage mais l'inconvénient lié à la pression des pneus demeurerait.

Si la garde au sol mesurée est trop faible, le moyen de commande 10 ordonne l'augmentation de la longueur du vérin-amortisseur 2. A contrario, le moyen de commande 10 ordonne la diminution de la longueur du vérin-amortisseur 2 si la garde au sol est trop importante.

Le dispositif fonctionne alors selon un mode en boucle fermée. En effet, il ajuste en permanence et automatiquement la longueur du vérin-amortisseur afin que la garde au sol tende vers la valeur prédéterminée de la garde au sol de consigne.

En outre, pour obtenir une bonne précision, il est envisageable d'utiliser une pluralité de capteurs 14. Le moyen de commande 10 réalise alors un traitement, tel qu'une moyenne, afin d'obtenir la valeur actuelle de la garde au sol h. Ce procédé permet de lisser les résultats de façon à améliorer la précision du dispositif.

Enfin, quelle que soit la variante utilisée, afin d'ajuster la longueur du vérin-amortisseur, le moyen de commande active les moyens de réglage, des électrovannes 11,12 reliées à un circuit hydraulique non représenté et permettant respectivement d'injecter ou d'évacuer du liquide hydraulique de la chambre de sortie 2' du vérin-amortisseur 2.

En autorisant l'injection du liquide hydraulique dans la chambre de sortie 2, le moyen de réglage augmente la longueur du vérin-amortisseur 2, alors que cette longueur diminue lorsque l'on évacue du liquide. On se référera par exemple au document FR2608242 pour comprendre le fonctionnement d'un tel vérin-amortisseur.

Les figures 1 et 2 montrent un dispositif pourvu de deux moyens de réglage, à savoir deux électrovannes 11, 12. Toutefois, il est concevable d'utiliser un unique moyen de réglage pouvant soit envoyer du liquide hydraulique, ou un gaz, dans la chambre de sortie, soit en retirer suivant l'ordre donné par le moyen de commande 10.

Naturellement, la présente invention est sujette à de nombreuses variations quant à sa mise en oeuvre. Bien que plusieurs modes de réalisations aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention.

En outre, bien que la description ne fasse apparaître qu'un seul train d'atterrissage, le procédé et le dispositif sont de préférence adaptés pour contrôler la longueur de chaque vérin-amortisseur de plusieurs trains. Ainsi, le dispositif peut comprendre un unique moyen de commande 10 tout en prévoyant des moyens de réglage pour chaque vérin-amortisseur de chaque train. Le moyen de commande contrôle alors l'ensemble des moyens de réglage.

Un tel dispositif permet entre autres d'ajuster l'inclinaison, dénommée assiette par l'homme du métier, de l'aéronef. Par exemple, si le sol n'est pas plat, le moyen de commande active les moyens de réglage pour ajuster la longueur de chaque vérin-amortisseur, la longueur d'un vérin-amortisseur pouvant différer de la longueur d'un autre vérin-amortisseur pour maintenir l'aéronef à une inclinaison prédéterminée. Chaque vérin-amortisseur doit alors respecter sa propre consigne.

A titre d'option, on peut d'ailleurs prévoir plusieurs capteurs, à savoir un capteur mesurant la garde au sol et un capteur mesurent l'assiette de l'aéronef.

Par ailleurs, on note que l'interface du dispositif comporte de façon optionnelle un écran permettant à un opérateur de visualiser la valeur prédéterminée et/ou la valeur de la garde au sol afin de pouvoir contrôler le bon fonctionnement du dispositif.

## Revendications

1. Procédé de contrôle et d'ajustage de la garde au sol (h) d'un aéronef (1) muni d'au moins un train d'atterrissage (30), ledit train d'atterrissage (30) étant pourvu d'un vérin-amortisseur (2) pour assurer une fonction d'amortissement et une fonction de rétractation dudit train d'atterrissage (30),
**caractérisé en ce que** lorsque l'aéronef est au sol, un moyen de commande (10) active automatiquement un moyen de réglage (11,12) pour ajuster en permanence la longueur dudit vérin-amortisseur (2) afin de maintenir ladite garde au sol (h) à une valeur prédéterminée, ledit moyen de commande bornant de plus ladite valeur prédéterminée de la garde au sol (h), ladite valeur prédéterminée étant indiquée au moyen de commande (10) via une interface (13, 13').

2. Procédé selon la revendication 1,
**caractérisé en ce que**, ledit moyen de commande (10) comportant une valeur de sécurité minimale de la garde au sol, si ladite valeur prédéterminée est inférieure à ladite valeur de sécurité minimale alors le moyen de commande (10) considère que ladite valeur prédéterminée est égale à ladite valeur de sécurité minimale.

3. Procédé selon l'une quelconque des revendications précédentes,
**caractérisé en ce que**, ledit moyen de commande (10) comportant une valeur de sécurité maximale de la garde au sol, si ladite valeur prédéterminée est supérieure à ladite valeur de sécurité maximale alors le moyen de commande (10) considère que ladite valeur prédéterminé est égale à ladite valeur de sécurité maximale.

4. Procédé selon l'une quelconque des revendications précédentes,
**caractérisé en ce que**, un capteur (14) envoyant au moyen de commande (10) un signal représentatif de la valeur actuelle de la garde au sol (h) de l'aéronef (1), ledit moyen de commande (10) active ledit moyen de réglage (11, 12) afin d'ajuster la longueur dudit vérin-amortisseur (2) pour que ladite valeur actuelle de la garde au sol (h) atteigne ladite valeur prédéterminée.

5. Procédé selon la revendication 4,
**caractérisé en ce que** ladite interface (13') est indépendante dudit moyen de commande (10).

6. Procédé selon l'une quelconque des revendications précédentes,
**caractérisé en ce que**, une pluralité de capteurs (14) envoyant chacun au moyen de commande (10) un signal représentatif d'une valeur actuelle locale de la garde au sol (h) relative à une zone de l'aéronef (1), ledit moyen de commande (10) réalise un traitement de ces signaux pour déterminer une valeur actuelle globale de la garde au sol puis active ledit moyen de réglage (11, 12) afin d'ajuster la longueur dudit vérin-amortisseur (2) pour que ladite valeur actuelle globale de la garde au sol (h) atteigne ladite valeur prédéterminée.

7. Procédé selon l'une quelconque des revendications 4 à 6,
**caractérisé en ce que**, ledit aéronef comportant une pluralité de train d'atterrissage muni chacun d'un vérin-amortisseur ajustable par un moyen de réglage, au moins un moyen de commande active lesdits moyens de réglage pour ajuster la longueur de chaque vérin-amortisseur, ladite longueur d'un vérin-amortisseur pouvant différer de la longueur d'un autre vérin-amortisseur pour maintenir l'aéronef à une inclinaison prédéterminée.

8. Dispositif de contrôle et d'ajustage de la garde au sol (h) d'un aéronef (1) muni d'au moins un train d'atterrissage (30), ledit train d'atterrissage (30) étant pourvu d'un vérin-amortisseur (2) pour assurer une fonction d'amortissement et une fonction de rétractation dudit train d'atterrissage,
**caractérisé en ce qu'**il est pourvu d'un moyen de réglage (11, 12) pour la longueur dudit vérin-amortisseur (2) et d'un moyen de commande (10), ledit moyen de commande (10) convenant à ajuster en permanence et automatiquement ladite longueur dudit vérin-amortisseur (2) via ledit moyen de réglage (11, 12) afin de maintenir ladite garde au sol (h) à une valeur prédéterminée, ledit moyen de commande bornant de plus ladite valeur prédéterminée.

9. Dispositif selon la revendication 8,
**caractérisé en ce qu'**il comporte au moins un capteur (14) pour mesurer ladite garde au sol (h).

10. Dispositif selon l'une quelconque des revendications 8 à 9,
**caractérisé en ce que** ledit moyen de réglage (11, 12) comporte au moins une électrovanne pour faire varier la quantité d'un liquide hydraulique présent dans une chambre de sortie (2') dudit vérin-amortisseur (2).

11. Dispositif selon l'une quelconque des revendications 8 à 10,
**caractérisé en ce que** ledit moyen de commande (10) comporte une interface (13) permettant à un opérateur d'indiquer ladite valeur prédéterminée.

12. Dispositif selon la revendication 11,
**caractérisé en ce que** ladite interface (13) est intégrée au dit moyen de commande (10).

13. Dispositif selon la revendication 11,
**caractérisé en ce que**, ladite interface (13) étant déportée, ladite interface (13) est reliée au dit moyen de commande (10) via une liaison filaire.

14. Dispositif selon la revendication 11,
**caractérisé en ce que**, ladite interface (13) étant déportée, ladite interface (13) est reliée au dit moyen de commande (10) via une liaison sans fil.

## Claims

1. Method for controlling and adjusting the ground clearance (h) of an aircraft (1) provided with at least one undercarriage (30), said undercarriage (30) being provided with a damper-actuator (2) for performing a function of damping and a function of retracting said undercarriage (30),
**characterised in that** when the aircraft is on the ground, a control means (10) automatically activates an adjustment means (11, 12) for continuously adjusting the length of said damper-actuator (2) in order to maintain said ground clearance (h) at a predetermined value, said control means furthermore setting limits on said predetermined value of the ground clearance (h), said predetermined value being specified to the control means (10) via an interface (13, 13').

2. Method according to Claim 1,
**characterised in that**, for said control means (10) including a minimum safety value of the ground clearance, if said predetermined value is less than said minimum safety value, then the control means (10) considers that said predetermined value is equal to said minimum safety value.

3. Method according to either one of the preceding claims,
**characterised in that**, for said control means (10) including a maximum safety value of the ground clearance, if said predetermined value is greater than said maximum safety value, then the control means (10) considers that said predetermined value is equal to said maximum safety value.

4. Method according to any one of the preceding claims,
**characterised in that**, for a sensor (14) sending a signal to the control means (10) representative of the current value of the ground clearance (h) of the aircraft (1), said control means (10) activates said adjustment means (11, 12) in order to adjust the length of said damper-actuator (2) so that said current value of the ground clearance (h) reaches said predetermined value.

5. Method according to Claim 4,
**characterised in that** said interface (13') is independent of said control means (10).

6. Method according to any one of the preceding claims,
**characterised in that**, for a plurality of sensors (14) each sending a signal to the control means (10) representative of a local current value of the ground clearance (h) relating to a zone of the aircraft (1), said control means (10) performs processing of said signals to determine an overall current value of the ground clearance and then activates said adjustment means (11, 12) to adjust the length of said damper-actuator (2) so that said overall current value of the ground clearance (h) reaches said predetermined value.

7. Method according to any one of Claims 4 to 6,
**characterised in that**, for said aircraft having a plurality of undercarriages each provided with a damper-actuator adjustable by an adjustment means, at least one control means activates said adjustment means to adjust the length of each damper-actuator, said length of a damper-actuator possibly differing from the length of another damper-actuator in order to maintain the aircraft at a predetermined inclination.

8. Device for controlling and adjusting the ground clearance (h) of an aircraft (1) provided with at least one undercarriage (30), said undercarriage (30) being provided with a damper-actuator (2) for performing a function of damping and a function of retracting said undercarriage,
**characterised in that** it is provided with an adjustment means (11, 12) for adjusting the length of said damper-actuator (2) and with a control means (10), said control means (10) being suitable for continuously and automatically adjusting said length of said damper-actuator (2) via said adjustment means (11, 12) so as to maintain said ground clearance (h) at a predetermined value, said control means furthermore setting limits on said predetermined value.

9. Device according to Claim 8,
**characterised in that** it includes at least one sensor (14) for measuring said ground clearance (h).

10. Device according to either one of Claims 8 to 9, **characterised in that** said adjustment means (11, 12) comprises at least one solenoid valve for varying the quantity of a hydraulic liquid present in an outlet chamber (2') of said damper-actuator (2).

11. Device according to any one of Claims 8 to 10,
**characterised in that** said control means (10) includes an interface (13) enabling an operator to specify said predetermined value.

12. Device according to Claim 11,
**characterised in that** said interface (13) is integrated in said control means (10).

13. Device according to Claim 11,
**characterised in that**, for said interface (13) being remote, said interface (13) is connected to said control means (10) via a wired connection.

14. Device according to Claim 11,
**characterised in that**, for said interface (13) being remote, said interface (13) is connected to said control means (10) via a wireless connection.

## Patentansprüche

1. Verfahren zur Kontrolle und Justierung der Bodenfreiheit (h) eines Luftfahrzeuges (1) mit mindestens einem Fahrgestell (30), wobei das Fahrgestell (30) mit einem Kolben-Zylinder-Stoßdämpfer (2) versehen ist, der eine Funktion der Stoßdämpfung und eine Funktion des Einfahrens des Fahrgestells (30) übernimmt, **dadurch gekennzeichnet, dass** während das Luftfahrzeug sich am Boden befindet eine Steuereinheit (10) automatisch eine Regeleinheit (11, 12) aktiviert, um permanent die Länge des Kolben-Zylinder-Stoßdämpfers (2) zu justieren um die Bodenfreiheit (h) auf einem vorbestimmten Wert zu halten, wobei die Steuereinheit außerdem den vorbestimmten Wert der Bodenfreiheit (h) begrenzt und der vorbestimmte Wert über eine Benutzeroberfläche (13, 13') der Steuereinheit (10) angezeigt wird.

2. Verfahren nach Anspruch 1, **dadurch gekennzeichnet, dass** die Steuereinheit (10) einen minimalen Sicherheitswert der Bodenfreiheit aufweist und wenn der vorbestimmte Wert kleiner ist als der minimale Sicherheitswert, dann betrachtet die Steuereinheit (10) den vorbestimmten Wert als den minimalen Sicherheitswert.

3. Verfahren nach einem der vorstehenden Ansprüche, **dadurch gekennzeichnet, dass** die Steuereinheit (10) einen maximalen Sicherheitswert der Bodenfreiheit aufweist und wenn der vorbestimmte Wert größer als der maximale Sicherheitswert ist, dann betrachtet die Steuereinheit (10) den vorbestimmten Wert als den maximalen Sicherheitswert.

4. Verfahren nach einem der vorstehenden Ansprüche, **dadurch gekennzeichnet, dass** ein Sensor (14) der Steuereinheit (10) ein Signal übermittelt, dass repräsentativ ist für den aktuellen Wert der Bodenfreiheit (h) des Luftfahrzeugs (1), wobei die Steuereinheit (10) die Regeleinheit (11,12) aktiviert, um die Länge des Kolben-Zylinder-Stoßdämpfers (2) so einzujustieren, dass der aktuelle Wert der Bodenfreiheit (h) den vorbestimmten Wert erreicht.

5. Verfahren nach Anspruch 4, **dadurch gekennzeichnet, dass** die Benutzeroberfläche (13') unabhängig von der Steuereinheit (10) ist.

6. Verfahren nach einem der vorstehenden Ansprüche, **dadurch gekennzeichnet, dass** eine Mehrzahl von Sensoren (14) jeweils der Steuereinheit (10) ein Signal übermitteln, dass repräsentativ ist für einen lokalen aktuellen Wert der Bodenfreiheit (h) in einem Bereich des Luftfahrzeugs (1), wobei die Steuereinheit (10) eine Verarbeitung dieser Signale vornimmt, um einen aktuellen globalen Wert der Bodenfreiheit zu bestimmen und um die Regeleinheit (11, 12) zu aktivieren, um die Länge des Kolben-Zylinder-Stoßdämpfers (2) so einzujustieren, dass der aktuelle globale Wert der Bodenfreiheit (h) den vorbestimmten Wert erreicht.

7. Verfahren nach einem der Ansprüche 4-6, **dadurch gekennzeichnet, dass** das Luftfahrzeug eine Mehrzahl von Fahrgestellen aufweist, die jeweils mit einem durch eine Regeleinheit justierbaren Kolben-Zylinder-Stoßdämpfer versehen sind, wobei mindestens eine Steuereinheit die Regeleinheit aktiviert, um die Länge eines jeden Kolben-Zylinder-Stoßdämpfers einzujustieren, wobei die Länge eines Kolben-Zylinder-Stoßdämpfers von der Länge eines anderen Kolben-Zylinder-Stoßdämpfers verschieden sein kann, um das Luftfahrzeug in einer vorbestimmten geneigten Stellung zu halten.

8. Vorrichtung zur Kontrolle und Justierung der Bodenfreiheit (h) eines Luftfahrzeugs (1), welches mit mindestens einem Fahrgestell (30) versehen ist, wobei das Fahrgestell (30) einen Kolben-Zylinder-Stoßdämpfer (2) aufweist, der eine Stoßdämpferfunktion und eine Funktion des Einfahrens des Fahrgestells übernimmt, **gekennzeichnet durch** eine Regeleinheit (11, 12) für die Länge des Kolben-Zylinder-Stoßdämpfers (2) und eine Steuereinheit (10), wobei die Steuereinheit (10) dazu geeignet ist permanent und automatisch die Länge des Kolben-Zylinder-Stoßdämpfers (2) über die Regeleinheit (11, 12) zu justieren, um die Bodenfreiheit (h) auf einem vorbestimmten Wert zu halten, wobei die Steuereinheit außerdem den vorbestimmten Wert beschränkt.

9. Vorrichtung nach Anspruch 8, **gekennzeichnet durch** mindestens einen Sensor (14) zur Messung der Bodenfreiheit (h).

10. Vorrichtung nach einem der Ansprüche 8 oder 9, **dadurch gekennzeichnet, dass** die Regeleinheit (11, 12) mindestens ein Elektroventil aufweist, um die Menge einer Hydraulikflüssigkeit, die in einer Auslasskammer (2') des Kolben-Zylinder-Stoßdämpfers (2) vorhanden ist zu variieren.

11. Vorrichtung nach einem der Ansprüche 8 bis 10, **dadurch gekennzeichnet, dass** die Steuereinheit (10) eine Benutzeroberfläche (13) aufweist, die es einem Benutzer erlaubt den vorbestimmten Wert anzuzeigen.

12. Vorrichtung nach Anspruch 11, **dadurch gekennzeichnet, dass** die Benutzeroberfläche (13) in die Steuereinheit (10) integriert ist.

13. Vorrichtung nach Anspruch 11, **dadurch gekennzeichnet, dass** die Benutzeroberfläche (13) separat angeordnet ist und die Benutzeroberfläche (13) mit der Steuereinheit (10) über eine Kabelverbindung verbunden ist.

14. Vorrichtung nach Anspruch 11, **dadurch gekennzeichnet, dass** die Benutzeroberfläche (13) separat angeordnet ist und die Benutzeroberfläche (13) mit der Steuereinheit (10) über eine schnurlose Verbindung verbunden ist.
